# NEW EUROPEAN PATENT SPECIFICATION

(11) **EP 0 961 541 B2**
(45) Date of publication and mention of the opposition decision: **27.07.2005**
(45) Mention of the grant of the patent: 13.11.2002
(21) Application number: 98959297.7
(22) Date of filing: 04.12.1998
(51) Int. Cl.: A01J 7/02

(54) **A CLEANING IMPLEMENT FOR CLEANING WITH A RINSING LIQUID AT LEAST PART OF A MILKING MACHINE**
REINIGUNGSVORRICHTUNG ZUM REINIGEN MINDESTENS EINES TEILS EINES MELKGERÄTS MIT EINER SPÜLLÖSUNG
DISPOSITIF DE NETTOYAGE PERMETTANT DE NETTOYER AVEC UN LIQUIDE DE RINCAGE AU MOINS UNE PARTIE D'UNE MACHINE A TRAIRE

(30) Priority: 08.12.1997 NL 1007727
(43) Date of publication of application: 08.12.1999
(73) Proprietor: MAASLAND N.V., 3155 PD Maasland (NL)
(72) Inventor: VAN DEN BERG, Karel, NL-2971 BR Bleskensgraaf (NL); VAN DER LAAN, Rudolf, Edward, NL-6086 GB Neer (NL)
(74) Representative: Corten, Maurice Jean F.M.
(86) International application number: PCT/NL1998/000690
(87) International publication number: WO 1999/029162

(56) References cited:
- EP-A- 0 679 331
- EP-A- 0 772 971
- Betriebsanleitung und Ersatzteilliste, Kochendwasser-Reinigungseinrichtung Westfalia Nr. 7015-9000-024, Ausgabe 1292.
- Betriebsanleitung und Ersatzteilliste, Kochendwasser-Reinigungseinrichtung Westfalia Nr. 7015-9000-023, Ausgabe 0890.
- "Mit Chemie oder Wasser spülen ?"in Top Agrar, Vol. 8/1993, pages R22 - R25.

## Description

The invention relates to a cleaning implement for cleaning with a rinsing liquid at least part of one or more components of one or more milking machines for milking animals, said cleaning implement for cleaning with a rinsing liquid being provided with a rinsing liquid reservoir to which there is connected a rinsing liquid supply line in which a first shut-off valve is included.

Such a cleaning implement for cleaning with a rinsing liquid is known, for example from EP-A-0679331.

With such cleaning implements for cleaning with a rinsing liquid there is added an additive, such as a base or an acid, to the rinsing liquid, usually in the rinsing liquid reservoir. Parts of the milking machine are cleaned with this solution. After a part of the machine has been cleaned with such a solution, said part is usually rinsed with a rinsing liquid in which no additives have been dissolved. For that purpose the rinsing liquid reservoir is filled again, whereafter the rinsing process can start. Filling again the rinsing liquid reservoir requires a great deal of time, while cleaning of the rinsing liquid reservoir itself is difficult.

The invention alms at obviating the above-mentioned drawbacks or at least minimizing them.

In accordance with the invention, this is achieved in that to the rinsing liquid supply line, between the first shut-off valve and the rinsing liquid reservoir, there is connected a first rinsing liquid discharge line in which a second shut-off valve is included, while the cleaning implement for cleaning with a rinsing liquid is further provided with a first metering device for adding an additive, such as e.g. a cleaning and/or disinfecting liquid, to the liquid that has been supplied via the rinsing liquid supply line, the additive being added in the rinsing liquid supply line, preferably between the reservoir and the first shut-off valve, and/or in the first rinsing liquid discharge line. It will be obvious that the additive can also be introduced into the rinsing liquid discharge line before the first shut-off valve. By adding the additive to the rinsing liquid directly in the rinsing liquid discharge line, the rinsing liquid reservoir is prevented from coming into contact with the additive. According to again another inventive feature, a third shut-off valve is included in the rinsing liquid supply line, between tne rinsing liquid reservoir and the place where the first rinsing liquid discharge line is connected to the rinsing liquid supply line. This third shut-off valve makes it possible to shut off the rinsing liquid reservoir relative to the rest of the lines, so that e.g. the rinsing liquid can be Introduced into the reservoir for the purpose of e.g. heat cleaning, while via the rinsing liquid supply line other parts of the milking machine can be cleaned with rinsing liquid. However, for the purpose of cleaning, e.g. descaling, the rinsing liquid reservoir, it is possible to add, by means of the metering device, an additive to the rinsing liquid that flows into the rinsing liquid reservoir

According to an inventive feature, the additive is added at the place where the first rinsing liquid discharge line is connected to the rinsing liquid supply line. By adding the additive at this crossing, there is required only one connection between the metering device and the rinsing liquid lines, as the stream direction of the rinsIng liquid can be used either for conveying the additive to the rinsing liquid reservoir or for discharging the additive via the further rinsing liquid discharge line.

According to again another inventive feature, the first and second shut-off valves are integrated in a so-called three-way valve. According to an inventive feature, in the situation that a three-way valve is applied, seen in the stream direction of the liquid supplied via the rinsing liquid supply line before the three-way valve, there is provided a connection between the rinsing liquid supply line and the first rinsing liquid discharge line, in which connection a further shut-off valve is included.

In accordance with an inventive feature, the first rinsing liquid discharge line branches off in at least one further rinsing liquid discharge line in which a shut-off valve is included. This branching off enables other components of the milking machine to come into contact with the cleaning implement for cleaning with a rinsing liquid for the purpose of being cleaned. According to again a further inventive feature, there is included a rinsing liquid buffer reservoir in at least one rinsing liquid discharge line. According to a further inventive feature, to the rinsing liquid buffer reservoir there is connected a pressure line, preferably a compressed air line, by means of which the liquid in the rinsing liquid buffer reservoir can be pressurized. In this manner certain components of the milking machine can be cleaned at a higher pressure. In a preferred embodiment of the invention, in the rinsing liquid reservoir there is provided a sensor by means of which the concentration of the additive in the rinsing liquid can be determined. In a preferred embodiment of the invention, in the rinsing liquid supply line there is provided a sensor by means of which the concentration of the additive in the rinsing liquid can be determined. In a preferred embodiment of the invention, in the rinsing liquid buffer reservoir there is provided a sensor by means of which the concentration of the additive in the rinsing liquid can be determined. In this manner there can be produced rinsing liquid with a proper concentration of additive, so that an optimal cleaning and/or disinfection of components of the milking machine can take place. In order to avoid that the pressurization of the liquid in the rinsing liquid buffer reservoir influences the rinsing liquid circuit, there is provided a non-return valve in the rinsing liquid discharge line above the rinsing liquid buffer reservoir. In order to prevent the rinsing liquid from being contaminated, according to an inventive feature, there is included a filter in the rinsing liquid discharge line.

In accordance with an inventive feature, it is possible to connect to the further rinsing liquid supply line at least one milking robot for automatically connecting teat cups to an animal to be milked, and/or a cleaning device for the cleaning of cleaning members by means of which the teats and/or the udder of an animal to be milked are/is cleaned, and/or a further cleaning device by means of which at least part of the robot arm is cleaned.

For the purpose of pre-heating tne rinsing liquid, such as e.g. water, there is included a heat exchanger in the rinsing liquid supply line. By means of the heat exchanger e.g. the heat which is released during cooling of the milk can be used for heating up the rinsing liquid. According to a preferred embodiment of the invention, there is included in the rinsing liquid supply line a protecting device for preventing the rinsing liquid from flowing into the rinsing liquid supply line in the direction opposite to that towards the rinsing liquid reservoir. In this manner it is possible to prevent the water supply from being contaminated with rinsing liquid to which additives have been added.

The invention further relates to a milking machine comprising a cleaning implement for cleaning with a rinsing liquid as described in the foregoing.

The invention further relates to a method of cleaning at least part of a milking machine, in which method rinsing liquid is supplied to a rinsing liquid reservoir via a rinsing liquid supply line, after which, by means of a metering device, an additive, such as e.g. an acid or a base, is added to the rinsing liquid, characterized in that, the additive is added in a rinsing liquid discharge line connected to the rinsing liquid reservoir, and in that by means of the metering device, an additive, such as an acid, is added to the rinsing liquid supply line. The latter measure makes it possible e.g. to descale the rinsing liquid reservoir.

According to a further inventive feature, all the valves, shut-off valves and/or protecting devices, and/or the metering device, are camputer-controlled.

The invention will now be explained in further detail with reference to an accompanying drawing, in which

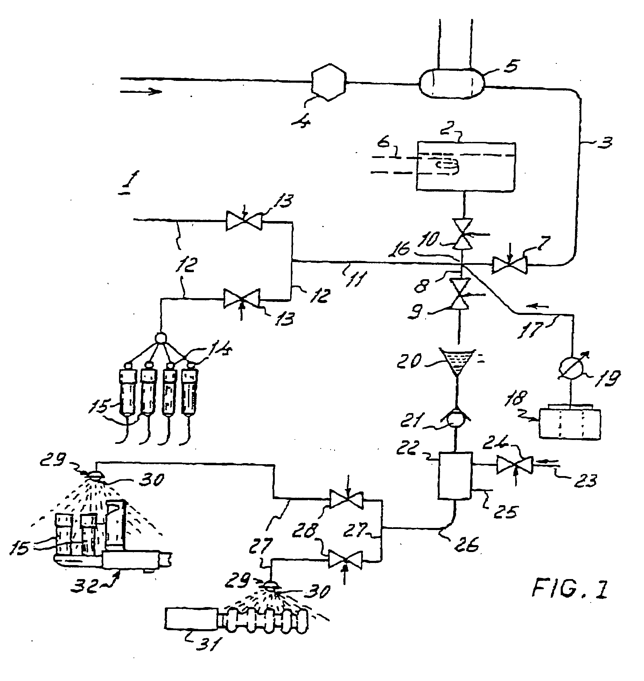

Figure 1 shows schematically an arrangement of a cleaning implement for cleaning with a rinsing liquid according to the invention.

Figure 1 shows schematically an arrangement of a cleaning implement 1 for cleaning with a rinsing liquid comprising a rinsing liquid reservoir 2 to which a rinsing liquid supply line 3 is connected. The rinsing liquid supply line 3 per se can be connected to the water supply. In the rinsing liquid supply line there is included a protecting device 4 for the purpose of preventing the rinsing liquid from flowing into the rinsing liquid supply line 3 in the direction opposite to that towards the rinsing liquid reservoir 2. In the rinsing liquid supply line 3 there is further included a heat exchanger 5 by means of which the rinsing liquid can be heated up. The heat exchanger 5 can make use of the heat which is released during cooling of the milk. In the rinsing liquid reservoir 2 there is further included a heating element 6 by means of which the rinsing liquid present in the reservoir 2 can be heated up. The rinsing liquid heated up can e.g. be used for a heat cleaning known per se.

In the rinsing liquid supply line 3 there is further included a first shut-off valve 7. To the rinsing liquid supply line 3 there is further connected a first rinsing liquid discharge line 8 in which a second shut-off valve 9 is included. Between the first shut-off valve 7 and the rinsing liquid reservoir 2 there is included a third shut-off valve 10 in the rinsing liquid supply line 3. At the place where the first rinsing liquid discharge line 8 is connected to the rinsing liquid supply line 3 there is connected a further rinsing liquid discharge line 11 which branches off in two lines 12 that are each provided with a fourth shut-off valve 13. At the end of the lines 12 there are located connecting elements 14 that can be connected to teat cups 15 of a (non-shown) milking machine. Via the connecting elements 14 rinsing liquid can be supplied to the teat cups 15 and the milk lines connected thereto. It will be obvious that to the other line 12 there can also be connected a milking cluster, while even more lines 12 may branch off from the further rinsing liquid discharge line 11 for the purpose of cleaning still further parts of the milking machine. To the crossing 16, where the first rinsing liquid discharge line 8 and the further rinsing liquid discharge lines 11 are connected to the rinsing liquid supply line 3, there is also connected a further line 17 of a metering device 18 by means of which an additive, such as a base or an acid, can be added to the rinsing liquid. The metering device 18 comprises a computer-controlled metering unit 19. In the first rinsing liquid discharge line 8 there are included a filter 20 and a non-return valve 21, as well as a rinsing liquid buffer reservoir 22. The rinsing liquid buffer reservoir comprises a supply line 23 via which additives can be supplied to the rinsing liquid buffer reservoir 22. The supply line 23 can be shut off by means of a fifth shut-off valve 24. To the supply line 23 there can be connected a similar metering device as the metering device 18. To the rinsing liquid buffer reservoir 22 there is further connected a pressure line 25 by means of which the rinsing liquid buffer reservoir 22 and a rinsing liquid present therein can be pressurized. The rinsing liquid buffer reservoir 22 is further provided with a rinsing liquid buffer discharge line 26 which branches off in two further lines 27 in the present embodiment. It will be obvious that the number of further lines 27 depends on the number of components to be cleaned of the milking machine. Each of the further lines 27 is provided with a sixth shut-off valve 28. At the end of the further lines 27 there is located a cleaning device 29 by means of which a component of the milking machine can be cleaned with rinsing liquid. In the present embodiment the cleaning device 29 comprises a spray nozzle 30. On the one hand by means of the cleaning device 29 there is cleaned a cleaning member 31 that is adapted to clean the teats of the animal, while by means of the other cleaning member there is cleaned a part of a robot arm 32 of a (not entirely shown) milking robot.

The cleaning Implement 1 for cleaning with a rinsing liquid operates as follows:

Via the rinsing liquid supply line 3 water is supplied to the reservoir 2. By means of (non-shown) liquid level sensors the amount of water in the reservoir 2 can be determined. After a sufficient quantity of water has been supplied to the rinsing liquid reservoir 2, the water is heated up by means of the heating elements 6. The water temperature depends on the type of cleaning process that is applied. When heat cleaning is applied, the water temperature will be above 70°C. During heating up of the rinsing liquid in the rinsing liquid reservoir 2 other parts of the milking machine can be cleaned with rinsing liquid via the rinsing liquid supply line 3, depending on the fact which shut-off valves are closed and opened. Furthermore it is possible to supply proportionally by means of the metering device 18 an additive, such as e.g. chlorine, acid, base, etc., to the rinsing liquid during the cleaning process. To the rinsing liquid buffer reservoir 22 an additive, such as e.g. sodium hypochlorite, can also be supplied via the supply line 23. This mixture can be pressurized via the compressed air line 25. Via the further lines 27 and the spray nozzles 30 it is possible to clean, c.q. to disinfect, the cleaning member 31 and the robot arm 32 at a high pressure.

## Claims

1. A cleaning implement (1) for cleaning with a rinsing liquid at least part of one or more components (15; 31; 32) of one or more milking machines for milking animals, said cleaning implement (1) for cleaning with a rinsing liquid being provided with a rinsing liquid reservoir (2) to which there is connected a rinsing liquid supply line (3) in which a first shut-off valve (7) is included, **characterized in that** to the rinsing liquid supply line (3), between the first shut-off valve (7) and the rinsing liquid reservoir (2), there is connected a first rinsing liquid discharge line (8) in which a second shut-off valve (9) is included, while the cleaning implement (1) for cleaning with a rinsing liquid is further provided with a first metering device (18) for adding an additive, such as e.g. a cleaning and/or disinfecting liquid, to the rinsing liquid that has been supplied via the rinsing liquid supply line (3), the additive being added in the rinsing liquid supply line (3), preferably between the reservoir (2) and the first shut-off valve (7), and/or in the first rinsing liquid discharge line (8).

2. A cleaning implement for cleaning with a rinsing liquid as claimed in claim 1, **characterized in that** a third shut-off valve (10) is included in the rinsing liquid supply line (3), between the rinsing liquid reservoir (2) and the place where the first rinsing liquid discharge line (8) is connected to the rinsing liquid supply line (3).

3. A cleaning implement for cleaning with a rinsing liquid as claimed in claim 1 or 2, **characterized in that** the additive is added at the place (16) where the first rinsing liquid discharge line (8) is connected to the rinsing liquid supply line (3).

4. A cleaning implement for cleaning with a rinsing liquid as claimed in claim 1, **characterized in that** the first and second shut-off valves (7, 9) are integrated in a three-way valve.

5. A cleaning implement for cleaning with a rinsing liquid as claimed in claim 4, **characterized in that**, seen in the stream direction of the liquid supplied via the rinsing liquid supply line (3) before the three-way valve, there is provided a connection between the rinsing liquid supply line (3) and the first rinsing liquid discharge line (8), in which connection a further shut-off valve is included.

6. A cleaning implement for cleaning with a rinsing liquid as claimed in any one of the preceding claims, **characterized in that** the first rinsing liquid discharge line (8) branches off in at least one further rinsing liquid discharge line (11) in which a shut-off valve (13) is included.

7. A cleaning implement for cleaning with a rinsing liquid as claimed in any one of the preceding claims, **characterized in that** there is included a rinsing liquid buffer reservoir (22) in at least one rinsing liquid discharge line (8; 11).

8. A cleaning implement for cleaning with a rinsing liquid as claimed in claim 7, **characterized in that** to the rinsing liquid buffer reservoir (22) there is connected a pressure line (25), preferably a compressed air line, by means of which the liquid in the rinsing liquid buffer reservoir (22) can be pressurized.

9. A cleaning implement for cleaning with a rinsing liquid as claimed in any one of the preceding claims, **characterized in that** in the rinsing liquid reservoir (2) there is provided a sensor by means of which the concentration of the additive in the rinsing liquid can be determined.

10. A cleaning implement for cleaning with a rinsing liquid as claimed in any one of the preceding claims, **characterized in that** in the rinsing liquid supply line (3) there is provided a sensor by means of which the concentration of the additive in the rinsing liquid can be determined.

11. A cleaning implement for cleaning with a rinsing liquid as claimed in any one of the preceding claims 7 to 10, **characterized in that** in the rinsing liquid buffer reservoir (22) there is provided a sensor by means of which the concentration of the additive in the rinsing liquid can be determined.

12. A cleaning implement for cleaning with a rinsing liquid as claimed in any one of the claims 7 to 11, **characterized in that** a non-return valve (21) is provided in the rinsing liquid discharge line (8) above the rinsing liquid buffer reservoir (22).

13. A cleaning implement for cleaning with a rinsing liquid as claimed in any one of the preceding claims, **characterized in that** a filter (20) is included in the rinsing liquid discharge line (8).

14. A cleaning implement for cleaning with a rinsing liquid as claimed in any one of the preceding claims, **characterized in that** it is possible to connect to the further rinsing liquid discharge lines (11) at least one milking robot for automatically connecting teat cups to an animal to be milked, and/or a cleaning device (29) for the cleaning of cleaning members (31) by means of which the toats and/or the udder of an animal to be milked are/is cleaned, and/or a further cleaning device (29) by means of which at least part of the robot arm (32) is cleaned.

15. A cleaning implement for cleaning with a rinsing liquid as claimed in any one of the preceding claims, **characterized in that** there is included a heat exchanger (5) in the rinsing liquid supply line (3).

16. A cleaning implement for cleaning with a rinsing liquid as claimed in any one of the preceding claims, **characterized in that** in the rinsing liquid supply line (3) there is included a protecting device (4) for preventing the rinsing liquid from flowing into the rinsing liquid supply line (3) in the direction opposite to that towards the rinsing liquid reservoir (2).

17. A milking machine comprising a cleaning implement (1) for cleaning with a rinsing liquid as claimed in any one of claims 1 - 16.

18. A method of cleaning at least part of a milking machine, in which method rinsing liquid is supplied to a rinsing liquid reservoir (2) via a rinsing liquid supply line (3), after which, by means of a metering device (18), an additive, such as e.g. an acid or a base, is added to the rinsing liquid, **characterized in that**, the additive is added in a rinsing liquid discharge line (8; 11) connected to the rinsing liquid reservoir (2), and **in that**, by means of the metering device (18), an additive, such as an acid, is added to the rinsing liquid supply line (3).

## Patentansprüche

1. Reinigungsvorrichtung (1) zum Reinigen mindestens eines Teiles eines oder mehrerer Bauteile (15; 31; 32) einer oder mehrerer Melkmaschinen zum Melken von Tieren mit einer Spülflüssigkeit, wobei die Reinigungsvorrichtung (1) zum Reinigen mit einer Spülflüssigkeit mit einem Spülflüssigkeitsbehälter (2) versehen ist, an den eine Spülflüssigkeits-Zuführleitung (3) angeschlossen ist, in der ein erstes Absperrventil (7) angeordnet ist,
**dadurch gekennzeichnet, daß** an die Spülflüssigkeits-Zuführleitung (3) zwischen dem ersten Absperrventil (7) und dem Spülflüssigkeitsbehälter (2) eine erste Spülflüssigkeits-Abflußleitung (8) angeschlossen ist, in der ein zweites Absperrventil (9) angeordnet ist, wobei die Reinigungsvorrichtung (1) zum Reinigen mit einer Spülflüssigkeit ferner mit einer ersten Dosiervorrichtung (18) versehen ist, um ein Additiv, wie z. B. eine Reinigungs- und/oder Desinfektionsflüssigkeit, der Spülflüssigkeit zuzusetzen, die über die Spülflüssigkeits-Zuführleitung (3) zugeführt worden ist, wobei das Additiv in der Spülflüssigkeits-Zuführleitung (3) zugesetzt wird, vorzugsweise zwischen dem Behälter (2) und dem ersten Absperrventil (7), und/oder in der ersten Spülflüssigkeits-Abflußleitung (8).

2. Reinigungsvorrichtung zum Reinigen mit einer Spülflüssigkeit nach Anspruch 1,
**dadurch gekennzeichnet, daß** ein drittes Absperrventil (10) in der Spülflüssigkeits-Zuführleitung (3) zwischen dem Spülflüssigkeitsbehälter (2) und der Stelle angeordnet ist, an der die erste Spülflüssigkeits-Abflußleitung (8) an die Spülflüssigkeits-Zuführleitung (3) angeschlossen ist.

3. Reinigungsvorrichtung zum Reinigen mit einer Spülflüssigkeit nach Anspruch 1 oder 2,
**dadurch gekennzeichnet, daß** das Additiv an der Stelle (16) zugesetzt wird, an der die erste Spülflüssigkeits-Abflußleitung (8) an die Spülflüssigkeits-Zuführleitung (3) angeschlossen ist.

4. Reinigungsvorrichtung zum Reinigen mit einer Spülflüssigkeit nach Anspruch 1,
**dadurch gekennzeichnet, daß** das erste und das zweite Absperrventil (7, 9) in ein Dreiwegeventil integriert sind.

5. Reinigungsvorrichtung zum Reinigen mit einer Spülflüssigkeit nach Anspruch 4,
**dadurch gekennzeichnet, daß** in Strömungsrichtung der über die Spülflüssigkeits-Zuführleitung (3) zugeführten Flüssigkeit vor dem Dreiwegeventil eine Verbindung zwischen der Spülflüssigkeits-Zuführleitung (3) und der ersten Spülflüssigkeits-Abflußleitung (8) vorgesehen ist, in der ein weiteres Absperrventil angeordnet ist.

6. Reinigungsvorrichtung zum Reinigen mit einer Spülflüssigkeit nach einem der vorhergehenden Ansprüche,
**dadurch gekennzeichnet, daß** sich die erste Spülflüssigkeits-Abflußleitung (8) in mindestens eine weitere Spülflüssigkeits-Abflußleitung (11) verzweigt, in der ein Absperrventil (13) angeordnet ist.

7. Reinigungsvorrichtung zum Reinigen mit einer Spülflüssigkeit nach einem der vorhergehenden Ansprüche,
**dadurch gekennzeichnet, daß** ein Spülflüssigkeits-Auffangbehälter (22) in mindestens einer Spülflüssigkeits-Abflußleitung (8; 11) angeordnet ist.

8. Reinigungsvorrichtung zum Reinigen mit einer Spülflüssigkeit nach Anspruch 7,
**dadurch gekennzeichnet, daß** an den Spülflüssigkeits-Auffangbehälter (22) eine Druckleitung (25), vorzugsweise eine Druckluftleitung, angeschlossen ist, mittels der die Flüssigkeit in dem Spülflüssigkeits-Auffangbehälter (22) mit Druck beaufschlagt werden kann.

9. Reinigungsvorrichtung zum Reinigen mit einer Spülflüssigkeit nach einem der vorhergehenden Ansprüche,
**dadurch gekennzeichnet, daß** in dem Spülflüssigkeitsbehälter (2) ein Sensor angeordnet ist, mittels dessen die Konzentration des Additivs in der Spülflüssigkeit ermittelt werden kann.

10. Reinigungsvorrichtung zum Reinigen mit einer Spülflüssigkeit nach einem der vorhergehenden Ansprüche,
**dadurch gekennzeichnet, daß** in der Spülflüssigkeits-Zuführleitung (3) ein Sensor angeordnet ist, mittels dessen die Konzentration des Additivs in der Spülflüssigkeit ermittelt werden kann.

11. Reinigungsvorrichtung zum Reinigen mit einer Spülflüssigkeit nach einem der vorhergehenden Ansprüche 7 bis 10,
**dadurch gekennzeichnet, daß** in dem Spülflüssigkeits-Auffangbehälter (22) ein Sensor angeordnet ist, mittels dessen die Konzentration des Additivs in der Spülflüssigkeit ermittelt werden kann.

12. Reinigungsvorrichtung zum Reinigen mit einer Spülflüssigkeit nach einem der Ansprüche 7 bis 11,
**dadurch gekennzeichnet, daß** ein Rückschlagventil (21) in der Spülflüssigkeits-Abflußleitung (8) über dem Spülflüssigkeits-Auffangbehälter (22) angeordnet ist.

13. Reinigungsvorrichtung zum Reinigen mit einer Spülflüssigkeit nach einem der vorhergehenden Ansprüche,
**dadurch gekennzeichnet, daß** ein Filter (20) in der Spülflüssigkeits-Abflußleitung (8) angeordnet ist.

14. Reinigungsvorrichtung zum Reinigen mit einer Spülflüssigkeit nach einem der vorhergehenden Ansprüche,
**dadurch gekennzeichnet, daß** an die weiteren Spülflüssigkeits-Abflußleitungen (11) mindestens ein Melkroboter zum automatischen Anschließen von Zitzenbechern an ein zu melkendes Tier und/oder ein Reinigungsgerät (29) zum Reinigen von Reinigungsgliedern (31) anschließbar ist, mit deren Hilfe die Zitzen und/oder das Euter eines zu melkenden Tieres gereinigt werden/wird, und/oder ein weiteres Reinigungsgerät (29), mittels dessen zumindest ein Teil des Roboterarmes (32) gereinigt wird.

15. Reinigungsvorrichtung zum Reinigen mit einer Spülflüssigkeit nach einem der vorhergehenden Ansprüche,
**dadurch gekennzeichnet, daß** in der Spülflüssigkeits-Zuführleitung (3) ein Wärmetauscher (5) angeordnet ist.

16. Reinigungsvorrichtung zum Reinigen mit einer Spülflüssigkeit nach einem der vorhergehenden Ansprüche,
**dadurch gekennzeichnet, daß** in der Spülflüssigkeits-Zuführleitung (3) eine Schutzvorrichtung (4) angeordnet ist, um zu verhindern, daß die Spülflüssigkeit in der Spülflüssigkeits-Zuführleitung (3) in die Richtung fließt, die entgegengesetzt zu der zum Spülflüssigkeitsbehälter (2) führenden Richtung ist.

17. Melkmaschine mit einer Reinigungsvorrichtung (1) zum Reinigen mit einer Spülflüssigkeit nach einem der Ansprüche 1 bis 16.

18. Verfahren zum Reinigen mindestens eines Teiles einer Melkmaschine, bei dem Spülflüssigkeit über eine Spülflüssigkeits-Zuführleitung (3) einem Spülflüssigkeitsbehälter (2) zugeführt wird, worauf mittels einer Dosiervorrichtung (18) ein Additiv, wie z. B. eine Säure oder eine Lauge, der Spülflüssigkeit zugesetzt wird,
**dadurch gekennzeichnet, daß** das Additiv in einer Spülflüssigkeits-Abflußleitung (8; 11) zugesetzt wird, die an den Spülflüssigkeitsbehälter (2) angeschlossen ist, und daß mittels der Dosiervorrichtung (18) ein Additiv, wie z. B. eine Säure, in der Spülflüssigkeits-Zuführleitung (3) zugesetzt wird.

## Revendications

1. Dispositif de nettoyage (1) pour nettoyer avec un liquide de rinçage au moins une partie d'un ou plusieurs composants (15; 31; 32) d'une ou plusieurs machines à traire pour la traite d'animaux, ledit dispositif de nettoyage (1) pour nettoyer avec un liquide de rinçage étant muni d'un réservoir de liquide de rinçage (2) auquel est raccordée une conduite d'alimentation de liquide de rinçage (3) dans laquelle est incluse une première vanne d'arrêt (7), **caractérisé en ce que**, entre la première vanne d'arrêt (7) et le réservoir de liquide de rinçage (2), une première conduite de décharge de liquide de rinçage (8), dans laquelle est incluse une deuxième vanne d'arrêt (9), est raccordée à la conduite d'alimentation de liquide de rinçage (3), le dispositif de nettoyage (1) pour nettoyer avec un liquide de rinçage étant, en outre, muni d'un premier appareil de dosage (18) pour ajouter un additif, comme par exemple un liquide de nettoyage et/ou de désinfection, au liquide de rinçage qui a été alimenté par la conduite d'alimentation de liquide de rinçage (3), l'additif étant ajouté dans la conduite d'alimentation de liquide de rinçage (3), de préférence entre le réservoir (2) et la première vanne d'arrêt (7) et/ou dans la première conduite de décharge de liquide de rinçage (8).

2. Dispositif de nettoyage pour nettoyer avec un liquide de rinçage selon la revendication 1, **caractérisé en ce qu'**une troisième vanne d'arrêt (10) est incluse dans la conduite d'alimentation de liquide de rinçage (3), entre le réservoir de liquide de rinçage (2) et l'endroit où la première conduite de décharge de liquide de rinçage (8) est raccordée à la conduite d'alimentation de liquide de rinçage (3).

3. Dispositif de nettoyage pour nettoyer avec un liquide de rinçage selon la revendication 1 ou 2, **caractérisé en ce que** l'additif est ajouté à l'endroit (16) où la première conduite de décharge de liquide de rinçage (8) est raccordée à la conduite d'alimentation de liquide de rinçage (3).

4. Dispositif de nettoyage pour nettoyer avec un liquide de rinçage selon la revendication 1, **caractérisé en ce que** la première et la deuxième vanne d'arrêt (7, 9) sont intégrées dans une vanne à trois voies.

5. Dispositif de nettoyage pour nettoyer avec un liquide de rinçage selon la revendication 4, **caractérisé en ce que**, vu dans le sens d'écoulement du liquide alimenté par la conduite d'alimentation de liquide de rinçage (3) avant la vanne à trois voies, un raccordement est prévu entre la conduite d'alimentation de liquide de rinçage (3) et la première conduite de décharge de liquide de rinçage (8), ledit raccordement incluant une autre vanne d'arrêt.

6. Dispositif de nettoyage pour nettoyer avec un liquide de rinçage selon l'une quelconque des revendications précédentes, **caractérisé en ce que** la première conduite de décharge de liquide de rinçage (8) bifurque dans au moins une autre conduite de décharge de liquide de rinçage (11) dans laquelle une vanne d'arrêt (13) est incluse.

7. Dispositif de nettoyage pour nettoyer avec un liquide de rinçage selon l'une quelconque des revendications précédentes, **caractérisé en ce qu'**un réservoir tampon de liquide de rinçage (22) est inclus dans au moins une conduite de décharge de liquide de rinçage (8; 11).

8. Dispositif de nettoyage pour nettoyer avec un liquide de rinçage selon la revendication 7, **caractérisé en ce qu'**une conduite sous pression (25), de préférence une conduite sous air comprimé, est raccordée au réservoir tampon de liquide de rinçage (22) permettant de mettre sous pression le liquide dans le réservoir tampon de liquide de rinçage (22).

9. Dispositif de nettoyage pour nettoyer avec un liquide de rinçage selon l'une quelconque des revendications précédentes, **caractérisé en ce qu'**un capteur est placé dans le réservoir de liquide de rinçage (2) par l'intermédiaire duquel on peut déterminer la concentration de l'additif dans le liquide de rinçage.

10. Dispositif de nettoyage pour nettoyer avec un liquide de rinçage selon l'une quelconque des revendications précédentes, **caractérisé en ce qu'**un capteur est placé dans la conduite d'alimentation de liquide de rinçage (3) par l'intermédiaire duquel on peut déterminer la concentration de l'additif dans le liquide de rinçage.

11. Dispositif de nettoyage pour nettoyer avec un liquide de rinçage selon l'une quelconque des revendications précédentes 7 à 10, **caractérisé en ce qu'**un capteur est placé dans le réservoir tampon de liquide de rinçage (22) par l'intermédiaire duquel on peut déterminer la concentration de l'additif dans le liquide de rinçage.

12. Dispositif de nettoyage pour nettoyer avec un liquide de rinçage selon l'une quelconque des revendications précédentes 7 à 11, **caractérisé en ce qu'**une vanne anti-retour (21) est prévue dans la conduite de décharge de liquide de rinçage (8) au-dessus du réservoir tampon de liquide de rinçage 22).

13. Dispositif de nettoyage pour nettoyer avec un liquide de rinçage selon l'une quelconque des revendications précédentes, **caractérisé en ce qu'**un filtre (20) est inclus dans la conduite de décharge de liquide de rinçage (8).

14. Dispositif de nettoyage pour nettoyer avec un liquide de rinçage selon l'une quelconque des revendications précédentes, **caractérisé en ce qu'**il est possible de raccorder aux autres conduites d'alimentation de liquide de rinçage (11) au moins un robot de traite pour raccorder automatiquement des gobelets trayeurs à un animal à traire et/ou un dispositif de nettoyage (29) pour le nettoyage d'éléments de nettoyage (31) à l'aide duquel les trayons et/ou le pis d'un animal à traire sont/est nettoyé et/ou un autre dispositif de nettoyage (29) à l'aide duquel au moins une partie du bras du robot (32) est nettoyé.

15. Dispositif de nettoyage pour nettoyer avec un liquide de rinçage selon l'une quelconque des revendications précédentes, **caractérisé en ce qu'**un échangeur de chaleur (5) est inclus dans la conduite d'alimentation de liquide de rinçage (3).

16. Dispositif de nettoyage pour nettoyer avec un liquide de rinçage selon l'une quelconque des revendications précédentes, **caractérisé en ce que** la conduite d'alimentation de liquide de rinçage (3) comprend un dispositif de protection (4) pour empêcher le liquide de rinçage de s'écouler dans la conduite d'alimentation de liquide de rinçage (3) dans le sens opposé à celui dirigé vers le réservoir de liquide de rinçage (2).

17. Machine à traire comprenant un dispositif de nettoyage (1) pour nettoyer avec un liquide de rinçage selon l'une quelconque des revendications 1 à 16.

18. Procédé pour nettoyer au moins une partie d'une machine à traire, dans lequel le liquide de rinçage est alimenté à un réservoir de liquide de rinçage (2) par l'intermédiaire d'une conduite d'alimentation de liquide de rinçage (3), après quoi, à l'aide d'un appareil de dosage (18), un additif, par exemple un acide ou une base, est ajouté au liquide de rinçage, **caractérisé en ce que** l'additif est ajouté dans une conduite de décharge de liquide de rinçage (8; 11) raccordée au réservoir de liquide de rinçage (2), et **en ce qu'**un additif, par exemple un acide, est ajouté dans la conduite d'alimentation de liquide de rinçage (3) à l'aide d'un appareil de dosage (18).
